# EUROPEAN PATENT APPLICATION

(11) **EP 4 715 342 A1**
(43) Date of publication of application: **25.03.2026**
(21) Application number: 24201821.6
(22) Date of filing: 23.09.2024
(51) Int. Cl.: G01F 23/284, G01S 13/88, B08B 17/06

(54) **LEVEL DETERMINATION SYSTEM WITH REDUCED SENSITIVITY TO CONDENSATION**

(71) Applicant: Rosemount Tank Radar AB, 435 23 Mölnlycke (SE)
(72) Inventor: GUNTELL, Oskar, 438 39 Landvetter (SE); ERIKSSON, Mikael, 593 52 Västervik (SE); PARTANEN, Tarmo, 425 42 Hisings Kärra (SE)
(74) Representative: Kransell & Wennborg KB

(57) **Abstract**

A level determination system (1), for determining a level of a material interface (13) in a tank, the level determination system (1) comprising: a transceiver (19) configured to generate, transmit, and receive electromagnetic signals; processing circuitry (21) coupled to the transceiver (19), and configured to determine the filling level based on a timing relation between an electromagnetic transmit signal (S_{T}) and an electromagnetic reflection signal (S_{R}) resulting from reflection of the transmit signal (S_{T}) at the material interface (13); and a signal propagation arrangement coupled to the transceiver (19), and configured to propagate the transmit signal (S_{T}) from the transceiver (19) towards the material interface (13) and to propagate the reflection signal (S_{R}) towards the transceiver (19), the signal propagation arrangement having a fluid absorbing surface portion (43), configured to absorb condensate (45).

## Description

### Technical Field of the Invention

The present invention relates to a level determination system.

### Technical Background

In certain applications where a level determination system may be used, vapor phase material present in the tank may transition to liquid phase material when coming into contact with the signal propagation arrangement of the level determination system. This may cause the formation of liquid drops on the signal propagation arrangement, which may, in turn, result in disturbed measurements.

It would be desirable to reduce the occurrence of liquid drops on the signal propagation arrangement of a level determination system, at least in locations where the formation of liquid drops may result in disturbed measurements.

### Summary

In view of the above, a general object of the present invention is to provide for improved level determination, in particular with reduced sensitivity to condensation.

According to the present invention, it is therefore provided a level determination system, for determining a level of a material interface in a tank, the level determination system comprising: a transceiver configured to generate, transmit, and receive electromagnetic signals; processing circuitry coupled to the transceiver, and configured to determine the filling level based on a timing relation between an electromagnetic transmit signal and an electromagnetic reflection signal resulting from reflection of the transmit signal at the material interface; and a signal propagation arrangement coupled to the transceiver, and configured to propagate the transmit signal from the transceiver towards the material interface and to propagate the reflection signal towards the transceiver, the signal propagation arrangement having a fluid absorbing surface portion, configured to absorb condensate.

By "condensate" should be understood liquid-phase substance formed through condensation of vapor-phase substance.

The present invention is based on the realization that absorption of the condensate forming when vapor-phase substance comes into contact with the signal propagation arrangement can prevent, or at least reduce, the occurrence of liquid drops, whereby the performance of the level determination system can be improved.

In an example of the level determination system according to the present invention, the fluid absorbing surface portion may be configured to absorb condensate through capillary action. Absorption through capillary action may facilitate removal of the absorbed condensate from the signal propagation arrangement, to prevent, or at least reduce the occurrence of, saturation of condensate in the fluid absorbing surface portion of the signal propagation arrangement.

To improve the absorption through capillary action, the capillary structures may be provided with a surface coating reducing the contact angle between the condensate and the surface. For the case of the condensate being mainly water, the surface coating may be a hydrophilic surface coating. Various hydrophilic surface coatings are, *per se*, well-known to one of ordinary skill in the art.

In an example of the level determination system according to the present invention, the signal propagation arrangement may comprise an electrically conductive base; and capillary structures on the electrically conductive base. The electrically conductive base structure of the signal propagation arrangement may enable predictable signal propagation of electromagnetic signals by the signal propagation arrangement, even when the capillary structures are made of an electrically non-conducting material, such as an electrically non-conducting polymer. The capillary structures may also be made of an electrically conducting material, such as a metal.

The capillary structures may, for example, be formed using subtractive or additive manufacturing techniques. Additive manufacturing techniques, often referred to as 3D-printing, may be particularly beneficial, since such manufacturing techniques may allow formation of capillary structures with complex shapes, and/or allow for integration into the signal propagation arrangement of cooling structures in the vicinity of the fluid absorbing surface portion. Such cooling structures may contribute to localized condensation on the fluid absorbing surface. Examples of suitable cooling structures may include cooling fins and/or cooling channels for accommodating a cooling fluid.

In an example of the level determination system according to the present invention, the capillary structures may be configured to define capillary openings being less than 1 mm in at least one dimension. Capillary openings that are less than 1 mm in diameter or width may be particularly suitable for capillary transportation of water condensate. For condensate of other substances with different properties in respect of surface tension, etc., other dimensions may be advantageous. For capillary openings in the form of channels, the width of the channels may be less than 1 mm. For capillary openings in the form of capillary tubes, the diameter of the tubes may be less than 1 mm.

In an example of the level determination system according to the present invention, the capillary structures may be configured to define capillary openings in the form of channels extending along the fluid absorbing surface portion. The channels may perform the dual function of first transporting the condensate - through capillary action - in a direction perpendicular to the fluid absorbing surface portion, and then - through gravity-assisted flow along the length of the channels - in a direction parallel to the fluid absorbing surface portion. Hereby, condensate can efficiently be removed from the fluid absorbing surface portion of the signal propagation arrangement.

In an example of the level determination system according to the present invention, the channels may be arranged to allow flow of absorbed condensate out of the signal propagation arrangement when the level determination system is arranged at the tank. Advantageously, the channels may be arranged to allow gravity-assisted flow in a direction having a vertical component.

In an example of the level determination system according to the present invention, the signal propagation arrangement may comprise a process seal; and a probe having a first portion surrounded by the process seal, and a second portion protruding from the process seal and extending towards and through the material interface in the tank. The fluid absorbing surface portion of the signal propagation arrangement may be an interior surface portion of the process seal, facing the first portion of the probe. This type of signal propagation arrangement is used in so-called HT (high temperature) and HTHP (high temperature high pressure) applications, where the process seal may have a substantial longitudinal extension, such as for example 10 cm or more, to prevent heating of sensitive electronics in the level determination system to a temperature higher than a predefined maximum temperature. Condensation is known to occur inside the process seal. By providing the fluid absorbing surface portion as an interior surface portion of the process seal, disturbance of the electromagnetic signals along the first portion of the probe can be reduced. For more efficient absorption of condensate, the fluid absorbing surface portion may constitute at least one half of an interior surface of the process seal, facing the first portion of the probe. For example, the fluid absorbing surface portion may constitute substantially all of the interior surface of the process seal, facing the first portion of the probe.

In an example of the level determination system according to the present invention, the fluid absorbing surface portion may be substantially rotationally symmetrical, in relation to the probe. This configuration may be beneficial for reducing disturbances of the electromagnetic signals.

In an example of the level determination system according to the present invention, the fluid absorbing surface portion may comprise capillary openings in the form of channels, extending to an open end of the process seal, when the level determination system is arranged at the tank. This configuration may provide for efficient transport of condensate out of the process seal.

In an example of the level determination system according to the present invention, the signal propagation arrangement may comprise a radiating antenna having a signal emission surface arranged to face an interior of the tank; and the fluid absorbing surface portion of the signal propagation arrangement may be a portion of the signal emission surface of the radiating antenna. For more efficient absorption of condensate, the fluid absorbing surface portion may constitute at least one half of the signal emission surface of the radiating antenna. For example, the fluid absorbing surface portion may constitute substantially all of the signal emission surface of the radiating antenna.

In an example of the level determination system according to the present invention, the fluid absorbing surface portion may comprise capillary openings in the form of channels, extending to an open end of the radiating antenna, when the level determination system is arranged at the tank. This configuration may provide for efficient transport of condensate away from the radiating antenna.

### Brief Description of the Drawings

These and other aspects of the present invention will now be described in more detail, with reference to the appended drawings showing example embodiments of the invention, wherein:
Fig 1 schematically illustrates a level determination system according to an embodiment of the present invention;
Fig 2 is a schematic illustration of the measurement unit comprised in the level determination system in fig 1;
Figs 3A-B illustrate condensation in a level determination system according to an example of the prior art;
Figs 4A-C illustrate the signal propagation arrangement of a level determination system according to an example of the present invention;
Fig 5 illustrates the signal propagation arrangement of a level determination system according to an example of the present invention;
Figs 6A-B are illustrations of exemplary capillary structures that may be comprised in the level determination system according to an example of the present invention; and
Figs 7A-B are illustrations of exemplary capillary structures that may be comprised in the level determination system according to an example of the present invention.

### Detailed Description of Example Embodiments of the Invention

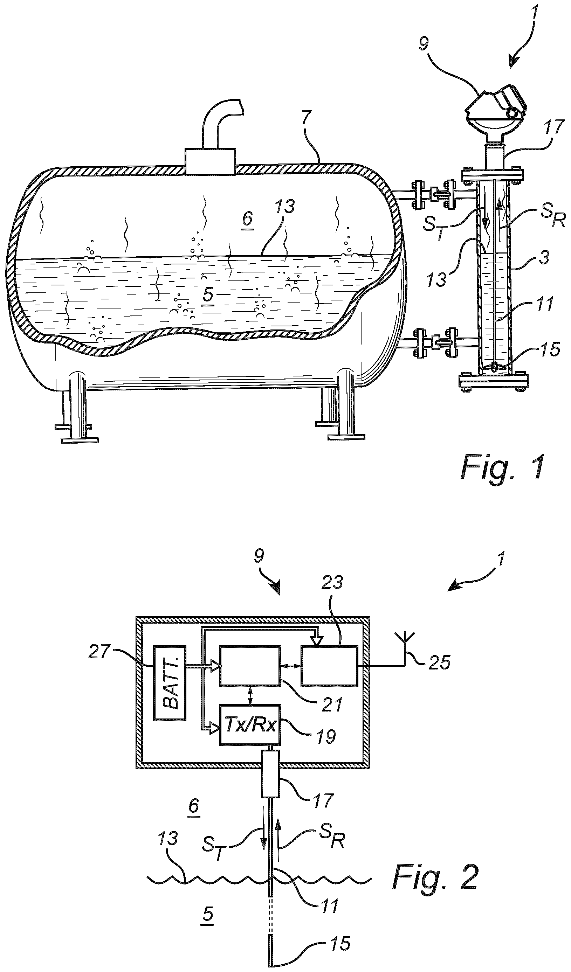

Fig 1 schematically shows a level determination system 1 according to an example of the present invention mounted on a measurement chamber 3 for gauging the level of a material interface in the tank 7, such as the interface 13 between a product 5 and the tank atmosphere 6. The level determination system 1, which is of the GWR (Guided Wave Radar) type, comprises a measuring electronics unit 9 arranged outside the tank 7, and a transmission line probe 11 arranged inside the tank 7 (in this particular example, the probe 11 is arranged inside the chamber 3, which is considered to be a part of the tank 7). As is schematically shown in fig 1, the probe 11 extends towards the material interface 13 between the product 5 and the tank atmosphere 6, and into the product 5 to a probe end 15. Additionally, the level determination system 1 comprises a process seal 17 where the probe 11 passes from an outside of the tank 7 to an inside of the tank 7. When the level determination system 1 is in operation, the probe 11 guides an electromagnetic transmit signal S_{T} towards the material interface 13 and an electromagnetic reflection signal S_{R} resulting from reflection of the transmit signal S_{T} at impedance transitions/discontinuities encountered by the transmit signal S_{T}. The exemplary level determination system in fig 1 will now be described in more detail with reference to the schematic block diagram in fig 2.

Referring to the schematic block diagram in fig 2, the measurement unit 9 of the level determination system 1 in fig 1 comprises a transceiver 19 and processing circuitry 21. Additionally, the block diagram in fig 2 depicts the following optional functional parts: a wireless communication control unit (WCU) 23, a communication antenna 25, and an energy store, such as a battery 27. As is schematically illustrated in fig 2, the processing circuitry 21 may control the transceiver 19 to generate, transmit and receive electromagnetic signals. The transmitted signals pass along the probe 11 through the process seal 17, and the received signals pass along the probe 11 through the process seal 17 to the transceiver 19.

The processing circuitry 21 may be configured to determine the level of the material interface 13 and provide a value indicative of the level to an external device, such as a processing unit of a control center, via the WCU 23 through the communication antenna 25. The level determination system 1 may advantageously be configured according to the so-called WirelessHART communication protocol (IEC 62591).

Although the measurement unit 9 is shown to comprise an energy store 27 and to comprise devices (such as the WCU 23 and the communication antenna 25) for allowing wireless communication, it should be understood that power supply and communication may be provided in a different way, such as through communication lines (for example 4-20 mA lines).

The local energy store 27 need not (only) comprise a battery, but may alternatively, or in combination, comprise a capacitor or super-capacitor.

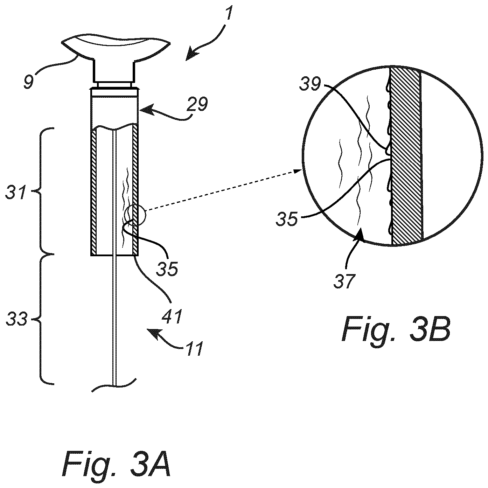

Level measurement systems may be used for various applications with various requirements and challenges. The exemplary application in fig 1 is a schematic boiler application, where the product 5 in the tank 7 may be boiling water under pressure. Such an application may be referred to as a High Temperature/High Pressure application (HTHP-application), requiring various special considerations. For example, special materials capable of withstanding a high temperature (such as 200°C - 400°C) at a high pressure (such as up to about 200 bar) may need to be used in the process seal 17, and the process seal 17 may need to be configured to thermally isolate the process (the interior of the tank 7/chamber 3) from the measuring electronics unit 9. The latter requirement may be addressed by making the process seal 17 relatively long, compared to a process seal for use in a standard environment, and allowing heat dissipation to the environment along the length of the process seal. A drawback of this process seal configuration is that condensation of vapor phase product to liquid phase product may take place inside the process seal. In the boiler example schematically shown in fig 1, this would result in condensation of water vapor to liquid water inside the process seal. This situation is schematically illustrated in figs 3A-B for an exemplary process seal 29 according to the prior art.

Referring to figs 3A-B, the process seal 29 surrounds a first portion 31 of the probe 11, and a second portion 33 of the probe 11 protrudes from the process seal 29 and extends towards the material interface 13 (not shown in figs 3A-B). As is schematically shown in figs 3A-B, where the process seal 29 is partly cut open for illustration purposes, the process seal 29 has an interior surface portion 35 facing the first portion 31 of the probe 11. As is schematically shown in fig 3B, water vapor 37 coming into contact with the relatively cold interior surface portion 35 will condense to form condensate, here in the form of water drops 39, on the interior surface portion 35. The water drops 39 may influence the propagation properties of the first portion 31 of the probe 11, and/or introduce new reflection signals, and/or reduce the accuracy of determination of the position along the probe of the lower end 41 of the process seal 29. This may, in turn, result in a reduced measurement accuracy of the level determination system 1. It should be noted that this may not only be an issue for a level measurement system of the GWR-type used in a boiler application, but also for any other application where condensation can take place on the signal propagation arrangement.

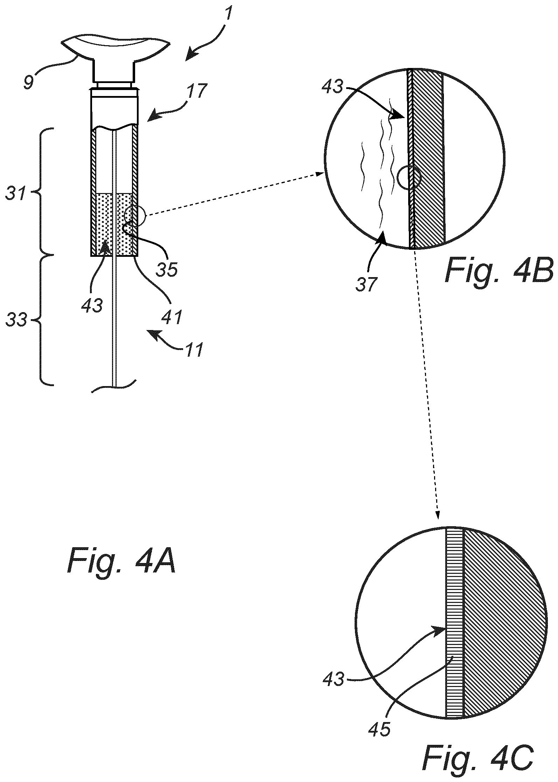

Having now described effects of condensation on a signal propagation arrangement according to an example of the prior art, an example of the signal propagation arrangement according to the present invention will now be described with reference to figs 4A-C.

The process seal 17 comprised in the level measurement system 1 schematically shown in figs 4A-C surrounds a first portion 31 of the probe 11, and a second portion 33 of the probe 11 protrudes from the process seal 17 and extends towards the material interface 13 (not shown in figs 4A-C). As in figs 3A-B, the process seal 17 in figs 4A-C is partly cut open for illustration purposes. The process seal 17 has an interior surface portion 35 facing the first portion 31 of the probe 11. In contrast to the prior art process seal 29 in figs 3A-B, at least a part of the interior surface portion 35 of the process seal 17 in figs 4A-C is constituted by a fluid absorbing surface portion 43 configured to absorb condensate. Therefore, aggregation of the condensate to drops, as in fig 3B, will be prevented, or at least reduced, as compared to the prior art process seal 29 without the fluid absorbing surface portion 43. The thus absorbed condensate 45 is schematically shown in fig 4C, which is a partial enlarged view of fig 4B. Due to the absence, or at least reduced occurrence, of drops, the measurement accuracy of the level determination system 1 can be improved in relation to the situation described above with reference to figs 3A-B.

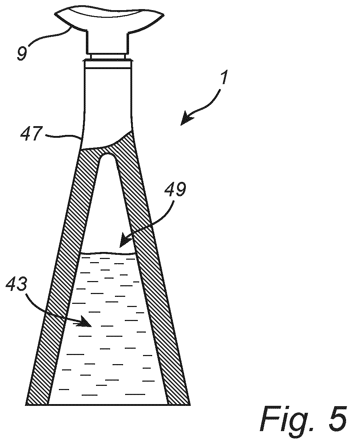

Fig 5 schematically illustrates a level determination system 1 according to another example, where the signal propagation arrangement comprises a radiating antenna 47, which is here partly cut open for illustration purposes, and the fluid absorbing surface portion 43 is a portion of a signal emission surface 49 of the radiating antenna 47. In the example configuration of fig 5, the radiating antenna 47 is a relatively narrow so-called cone antenna, which may be suitable for high temperature applications, such as the boiler application illustrated in fig 1.

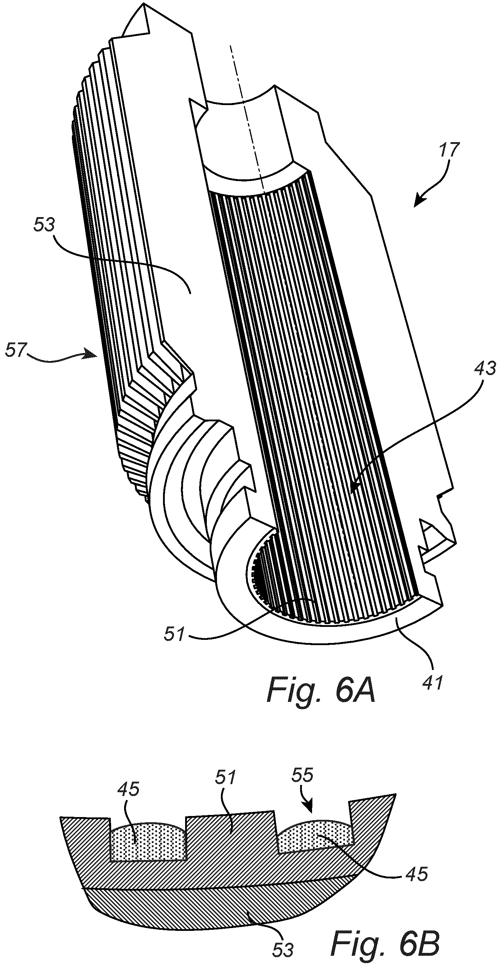

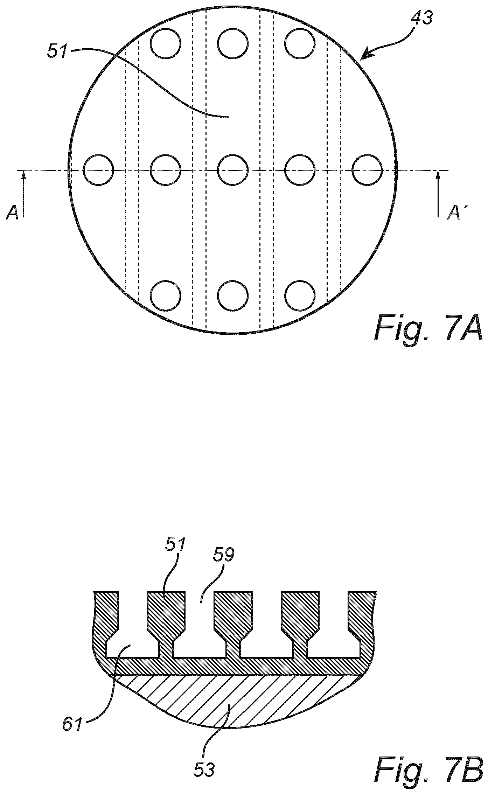

As was explained above in the Summary section, the fluid absorbing surface portion 43 schematically illustrated in figs 4A-C and fig 5 may be provided with capillary structures configured to absorb condensate through capillary action. Some illustrative examples of such capillary structures will now be described with reference to figs 6A-B and figs 7A-B.

Fig 6A is a schematic illustration of a part of a process seal 17 comprised in the signal propagation arrangement of a level determination system according to an example of the present invention. Referring to fig 6A, the process seal 17, which is part of the signal propagation arrangement of a level determination system 1 of the GWR-type, has a fluid absorbing surface portion 43. As is schematically illustrated in fig 6A, the fluid absorbing surface portion 43, which constitutes substantially all of the interior surface of the process seal 17, comprises capillary structures 51 on an electrically conductive base 53. Referring additionally to fig 6B, which is an enlarged cross-section view schematically illustrating the fluid absorbing surface portion 43 of the process seal, the capillary structures 51 in this example configuration are configured to define capillary openings 55 in the form of channels extending along the fluid absorbing surface portion 43. Due to capillary action, the condensate 45 will be pulled into the capillary openings 55 (channels), as is schematically illustrated in fig 6B. Since, in the example configuration of figs 6A-B, the channels run all the way to the lower end 41 of the process seal 17, and the process seal 17 is configured to be vertically arranged at the tank 7/chamber 3, the condensate 45 pulled into the channels can exit the open ends of the channels at the lower end 41, assisted by gravity, to allow absorption of more condensate 45.

The process seal part in figs 6A-B may advantageously be formed using additive manufacturing, which provides for efficient formation of complex structures, such as the capillary structures 51 and the cooling fins 57 of the exemplary process seal part in fig 6A.

Figs 7A-B schematically illustrate another example configuration of the fluid absorbing surface portion 43 of the signal propagation arrangement comprised in the level determination system 1 according to examples of the present invention. Fig 7A is a plane view of an enlarged portion of the fluid absorbing surface portion 43, and fig 7B is a cross-section view from the side of the section taken along the line A-A' in fig 7A.

In the example configuration of figs 7A-B, the capillary structures 51 are configured to define capillary openings in the form of capillary tubes 59. As is indicated in figs 7A-B, the capillary structures 51 are, in this particular example, configured to additionally define vertically extending channels 61 that are fluidly connected to the capillary tubes 59. Hereby, condensate pulled in by the capillary tubes 59 can enter the vertically extending cannels 61, and can exit open ends of the channels at the lower end 41 of the process seal 17 (or radiating antenna 47) as described above with reference to figs 7A-B.

The person skilled in the art realizes that the present invention by no means is limited to the embodiments described above. On the contrary, many modifications and variations are possible within the scope of the appended claims. For example, the fluid absorbing surface portion may comprise a combination of different capillary structures, with different dimensions and/or capillary configurations.

## Claims

1. A level determination system (1), for determining a level of a material interface (13) in a tank (7), the level determination system (1) comprising:
a transceiver (19) configured to generate, transmit, and receive electromagnetic signals;
processing circuitry (21) coupled to the transceiver (19), and configured to determine the filling level based on a timing relation between an electromagnetic transmit signal (S_{T}) and an electromagnetic reflection signal (S_{R}) resulting from reflection of the transmit signal (S_{T}) at the material interface (13); and
a signal propagation arrangement coupled to the transceiver (19), and configured to propagate the transmit signal (S_{T}) from the transceiver (19) towards the material interface (13) and to propagate the reflection signal (S_{R}) towards the transceiver (19), the signal propagation arrangement having a fluid absorbing surface portion (43), configured to absorb condensate (45).

2. The level determination system (1) according to claim 1, the fluid absorbing surface portion (43) being configured to absorb condensate (45) through capillary action.

3. The level determination system (1) according to claim 2, the signal propagation arrangement comprising:
an electrically conductive base (53); and
capillary structures (51) on the electrically conductive base (53).

4. The level determination system (1) according to claim 3, the capillary structures (51) being configured to define capillary openings (55; 59) being less than 1 mm in at least one dimension.

5. The level determination system (1) according to claim 3 or 4, the capillary structures (51) being configured to define capillary openings in the form of channels (55) extending along the fluid absorbing surface portion (43).

6. The level determination system (1) according to claim 5, each of the channels (55) having a width being less than 1 mm.

7. The level determination system (1) according to claim 5 or 6, each of the channels (55) being arranged to allow flow of absorbed condensate (45) out of the signal propagation arrangement when the level determination system (1) is arranged at the tank (7).

8. The level determination system (1) according to any one of claims 1 to 4, the capillary structures (51) being configured to define capillary openings in the form of capillary tubes (59).

9. The level determination system (1) according to any one of the preceding claims, the signal propagation arrangement comprising:
a process seal (17); and
a probe (11) having a first portion (31) surrounded by the process seal (17), and a second portion (33) protruding from the process seal (17) and extending towards and through the material interface (13) in the tank (7),
the fluid absorbing surface portion (43) of the signal propagation arrangement being an interior surface portion of the process seal (17), facing the first portion (31) of the probe (11).

10. The level determination system (1) according to claim 9, the fluid absorbing surface portion (43) constituting at least one half of an interior surface (35) of the process seal (17), facing the first portion (31) of the probe (11).

11. The level determination system (1) according to claim 9 or 10, the fluid absorbing surface portion (43) being substantially rotationally symmetrical, in relation to the probe (11).

12. The level determination system (1) according to any one of claims 9 to 11, the fluid absorbing surface portion (43) comprising capillary openings in the form of channels (55), extending to an open end (41) of the process seal (17), when the level determination system (1) is arranged at the tank (7).

13. The level determination system (1) according to any one of the preceding claims:
the signal propagation arrangement comprising a radiating antenna (47) having a signal emission surface (49) arranged to face an interior of the tank; and
the fluid absorbing surface portion (43) of the signal propagation arrangement being a portion of the signal emission surface (49) of the radiating antenna (47).

14. The level determination system (1) according to claim 13, the fluid absorbing surface portion (43) constituting at least one half of the signal emission surface (49) of the radiating antenna.

15. The level determination system (1) according to claim 13 or 14, the fluid absorbing surface portion (43) comprising capillary openings in the form of channels (55), extending to an open end of the radiating antenna, (47) when the level determination system (1) is arranged at the tank (7).
